# EUROPEAN PATENT SPECIFICATION

(11) **EP 1 088 456 B1**
(45) Date of publication and mention of the grant of the patent: **01.03.2006**
(21) Application number: 99923627.6
(22) Date of filing: 11.05.1999
(51) Int. Cl.: H04Q 1/446

(54) **Method and device for detecting a signal having a certain frequency**
Verfahren und Anordnung zur Detektion eines Signals mit einer bestimmten Frequenz
Procédé et système pour détecter un signal ayant une certaine préquence

(30) Priority: 11.05.1998 FI 981038
(43) Date of publication of application: 04.04.2001
(73) Proprietor: Tellabs Oy, 02630 Espoo (FI)
(72) Inventor: HURME, Harri, FIN-02100 Espoo (FI); TAMMINEN, Timo, M., FIN-00410 Helsinki (FI); KOSKELA, Jari, FIN-00510 Helsinki (FI)
(74) Representative: Brax, Matti Juhani
(86) International application number: PCT/FI1999/000395
(87) International publication number: WO 1999/059347

(56) References cited:
- US-A- 4 127 824

## Description

This invention relates to signal detection or determining whether a signal oscillating at a certain frequency occurs in a certain line connection or not. More paiticularly, the invention relates to signal detection in an analogue telephone line.

In data transfer technology, there is often a need to detect whether a voltage and/or current signal having a certain frequency occurs in a certain line connection or not. An example of this is a telephone system in which an analogue telephone exchange sends invoicing pulses as short signal pulses having a frequency of 12 kHz or 16 kHz. Another device of the telephone system, such as an OLIC (office line interface circuit), which simulates an analogue telephone,must be able to detect the invoicing pulses correctly, which means that all invoicing pulses must be detected, but other signals must not be allowed to cause a faulty detection.

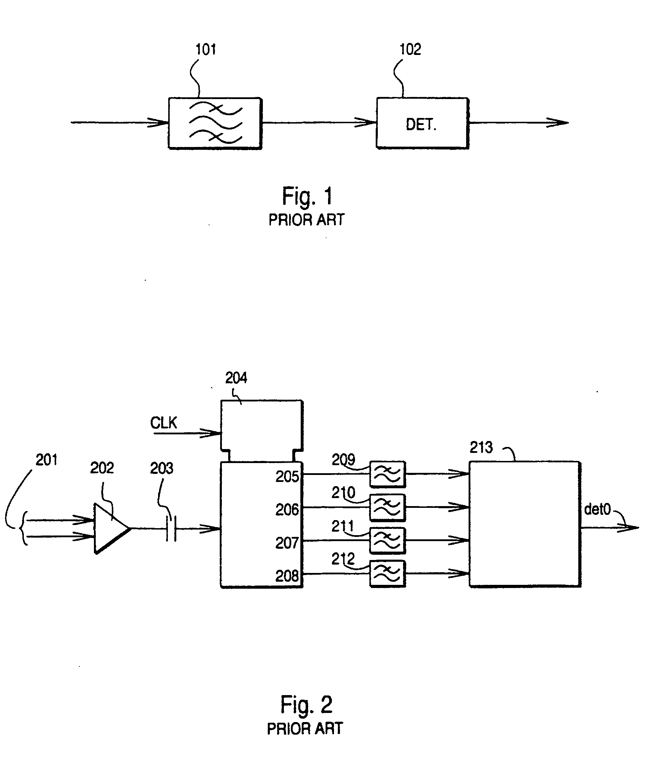

A conventional method for detecting a signal of a certain frequency is to use two circuit devices 101 and 102 connected in series as in Figure 1, of which devices the first one in relation to the direction in which the signal moves is a passband filter or a corresponding frequency-sensitive circuit device 101, and the second one is a level indicator 102 which is not frequency-sensitive. The filter 101 has a certain frequency response, in which the center frequency of the passband is the same as the desired signal frequency to be detected. The status of the output of the level indicator 102 is active when a signal of a sufficiently high level comes through the filter 101, and otherwise passive. The arrangement shown in Figure 1 entails many drawbacks. It may be laborious to make the frequency response of the filter 101 as desired, and it may require the use of a large and/or complicated filter. It is difficult to move the passband of the passband filter for a remarkable distance, and therefore, if the same device should be used according to selection to detect a signal of either 12 kHz or 16 kHz, it may be necessary to change the filter 101 in connection with the selection.

Patent application Fl-944857 discloses a more advanced arrangement as shown in Figure 2 for detecting a signal of a certain frequency. The voltage signal running in the twin cable 201 is amplified in the amplifier 202 and fed via a decoupling capacitor 203 to a demultiplexer 204, which is controlled by a clock signal CLK. The demultiplexer 204 controlled by the clock signal switches the voltage signal received cyclically to only one of the outputs 205 to 208 at a time. The low pass filters 209 to 212 filter the voltage signal connected to each output substantially as direct voltage. The comparator 213 makes comparisons between the filtered direct voltage signals and gives an output signal det0, if there is a sufficient difference between the outputs of certain filters.

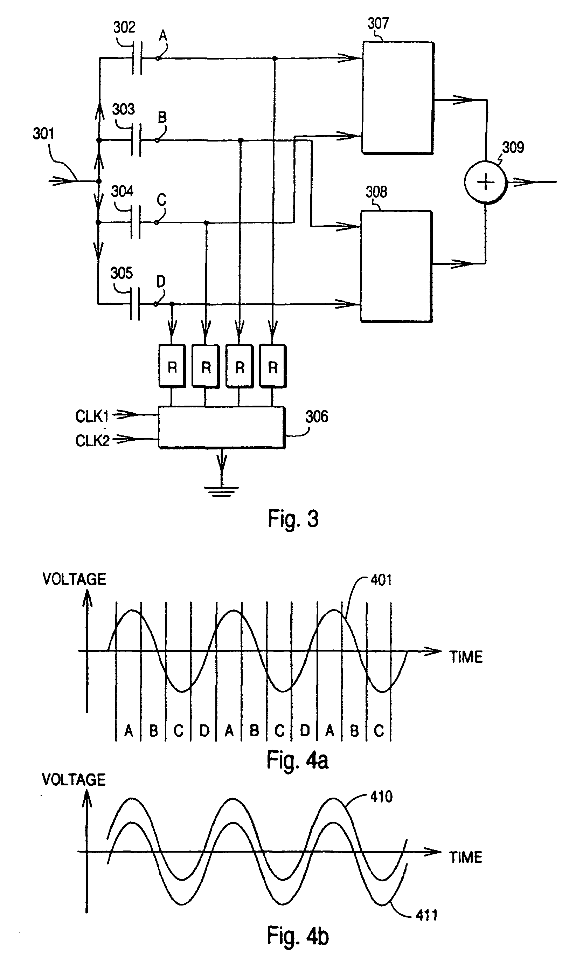

In the solution illustrated in Figure 2 the idea is that when the frequency of the clock signal CLK is exactly four times the frequency of the signal to be detected, the demultiplexer 204 has time to connect the voltage signal once to each output during one cycle of the signal to be detected. The part of the signal to be detected which is connected to a certain output remains unchanged from one cycle to another. Thus the filters 209 to 212 produce direct voltages of different levels according to which part of the waveform of the signal to be detected is connected to which output. The comparator 213 detects that the voltages produced by the filters 209 to 212 differ from each other. If the twin cable 201 does not contain the signal which was to be detected, but it contains a signal of another frequency instead, the part of the waveform of the signal connected to a certain output changes from one cycle to another. Thus a variable voltage signal which does not proceed through the filter is coupled to each filter 209 to 212. The comparator 213 "sees" the outputs of all filters substantially similar, whereby it does not give an output signal.

The arrangement shown in Figure 2 entails the drawback that the signal to be detected has to be led through both a demultiplexer and filters, which may cause a remarkable attenuation of the signal and losses, which cause warming up of the circuit during use. With regard to the operation of the circuit it is important that the frequency responses of filters 209 to 212 are very similar, which requires the use of relatively expensive, tuned filters. In addition, the arrangement is only suitable for detecting voltage signals.

A prior art document US 4,127,824 discloses a method and a circuit for signal detection, in which a number of parallel capacitors are used as timed integrators of the incoming signal. If the difference of integrated voltages in two of the parallel capacitors is larger than a given threshold, the incoming signal is deemed to contain the required frequency.

It is an objective of the present invention to provide a method and arrangement for detecting a signal of a certain frequency in which the above described drawbacks of the prior art can be reduced or eliminated.

The objectives of the invention are achieved by connecting the signal to be detected to parallel, energy-storing components, which are synchronized and the outputs of which can be compared in different ways.

The device according to the invention is defined in claim 1.

The invention also relates to a method, which is defined in claim 7.

According to the invention, a signal which may contain a signal to be detected is connected to parallel, energy-storing components, such as capacitances or inductances, the number of which is not limited as such, but is four in the preferred embodiment of the invention. The operation of the energy-storing components is synchronized so that the signal produced in each one of them is deviated by connecting the output for a certain time to a pre-determined deviating standard level. The switching moments when the deviation takes place, change cyclically at a certain frequency from one energy-storing component to another. The deviation frequency is comparable to the frequency of the signal to be detected. If the signal to be detected is present, the deviation causes standard-sized differences between the outputs of certain energy-storing components defined in pairs. The standard-sized differences are detected by the comparators connected to the outputs. The comparators can be connected together in different ways in order to improve the clarity of the detection.

In the solution according to the invention, the signal to be detected does not proceed through the demultiplexer as in the solution described in the application FI-944857, and the invention does not necessarily require the use of filters on the signal path. The frequency to be detected can be easily selected by changing the above mentioned deviation frequency.

In the following, the invention will be described in more detail with reference to the examples of preferred embodiments and the accompanying drawings, in which
- Figure 1: shows a prior art detector,
- Figure 2: shows another prior art detector,
- Figure 3: shows a preferred embodiment of the invention,
- Figures 4a and 4b: show certain voltage forms in the embodiment of Figure 3,
- Figure 5: shows another preferred embodiment of the invention, and
- Figure 6: illustrates a method according to the invention.

Above in connection with the description of the prior art, reference was made to Figures 1 and 2, and in the following description of the invention and its preferred embodiments reference will be made mostly to figures 3 to 6. In the figures, the same reference numbers are used for corresponding parts.

Figure 3 shows a simplified block diagram, in which a preferred embodiment of the invention suitable for the detection of the voltage signal is illustrated. The signal which is examined for the presence of the signal to be detected, is led to a circuit shown in Figure 3 along line 301, and it is branched to parallel capacitances 302 to 305 of the same size. From one side of each capacitance, there is a connection via a block denoted with R and a certain switching arrangement to the reference potential, which in the embodiment shown in the figure is the ground potential. All four switching arrangements are implemented by means of a multiplexer 306, the operation of which is controlled by the clock signals CLK1 and CLK2. The blocks denoted with R can be simply resistances or they can contain more complicated arrangements. However, all R-blocks are substantially similar. From the capacitances 302 and 304 there is also a connection to the comparator 307, and from the capacitances 303 and 305 there is a connection to the comparator 308. The outputs of the comparators 307 and 308 are summed in the adder 309, the output signal of which is the output signal of the whole circuit arrangement.

For the description of the coupling shown in Figure 3, it is at first assumed that the signal coming along the line 301 is a pure sine wave having exactly the frequency which is to be detected. It is also assumed that the signal to be detected is a pure sinusoidal alternating voltage, whereby its time average is the same as the reference potential shown in Figure 3. The capacitances 302 to 305 are dimensioned high enough to allow the voltage signal to be detected pass through them, so that if there were no connection between the capacitances and the reference potential, an identical sinusoidal voltage would be detected at each point A, B, C and D. The operation of the multiplexer 306 is controlled by the clock signal CLK1 and/or CLK2 so that during one cycle of the signal to be detected there is a connection once from each point A, B, C and D through a corresponding R-block to the reference potential. Figure 4a shows a timing of the operation of the multiplexer 306 by way of example. In this example, the waveform 401 depicts the voltage signal at the frequency to be detected, and the letters A, B, C and D denote the times during which a connection from each point A, B, C and D through a corresponding R-block to the reference potential exists.

It is beneficial to the operation of the invention if the input impedance of the R-blocks is substantially smaller than the input impedance of the comparators 307 and 308. In that case, the above described synchronized coupling causes different amounts of electric energy to be stored in the capacitances 302 to 305 depending on at which moment of the cycle time of the signal to be detected the capacitance is connected via the R-block to the ground potential. From Figure 4a it is seen, for example, that the connection from point A or capacitance 302 through the corresponding R-block to the ground potential exists when the voltage of the signal to be detected is nearly at the highest, and the connection from point C or capacitance 304 through a corresponding R-block to the ground potential exists when the voltage of the signal to be detected is nearly at the lowest. Thus the electric energy stored in the capacitances 302 and 304 is seen in that the potential of point A is continuously by a certain constant higher than the potential of point C. The situation can also be described by saying that the direct voltage component integrated into the capacitance 302 is larger than the corresponding direct voltage component integrated into the capacitance 304.

It is important to note that in the embodiment of Figure 3 the capacitances 302 and 305 do not function as integrators in the sense that they would constitute the time integral of the signal to be detected. The integration mentioned above means that each capacitance stores a certain amount of electromagnetic energy from the signal to be detected, and the amount of the energy depends on at which point of the cycle of the signal to be detected and led to the capacitance the connection to the reference potential is made. In Figure 4b, curve 410 depicts the potential of point A and curve 411 depicts the potential of point C. Thus a sinusoidal voltage signal is detected between points A and C and the ground potential, having the same frequency as the signal to be detected, but the voltage signals detected at different points are deviated in relation to one another by a certain constant voltage difference. By examining Figure 4a it can be concluded that the same phenomenon would occur between points B and D, but weaker, because at the points of time denoted by B and D when the connection between the capacitance 303 or 305 and the ground potential exists, the absolute value of the signal to be detected is relatively close to zero.

The signals according to Figure 4b can be led to the comparator 307 according to Figure 3, because the output of the comparator only depends on the potential difference between its two inputs and not on the absolute value of the potential of either input. A comparator like this is generally characterized by saying that it is immune to common-mode signals. Thus the output of the comparator 307 is active when the direct voltage components integrated into the capacitances 302 and 304 differ from each other by more than the threshold value set for the comparator 307. In the same way, the output of the comparator 308 is active when the direct voltage components integrated into the capacitances 303 and 305 differ from each other by more than the threshold value set for the comparator 308, which is preferably the same as the threshold value set for the comparator 307. Summing the output signals of the comparators 307 and 308 in the adder 309 causes the output of the whole circuit to be active if the output signal of at least one of the comparators is active. The active and passive mode of a certain signal can be defined suitably in each connection; in digital circuits applying conventional logic the active mode generally corresponds to the bit value "1", which is described by a certain positive voltage, and the passive mode corresponds to the bit value "0", which is described by a voltage close to the ground potential.

It cannot be known in advance how the switching cycle of the multiplexer 306 relates to the phase of the signal to be detected. Figures 4a and 4b relate to a situation in which the direct voltage component integrated into the capacitance 302 is larger than the direct voltage component integrated into the capacitance 304, but a relative transition of half a cycle of the signal to be detected between the signal and the switching cycle of the multiplexer would change the situation exactly the opposite. Because of this, it is advantageous to implement the comparators 307 and 308 as so-called window comparators, which have an active output when the absolute value of the difference between the input signals exceeds a certain threshold value, regardless of which one of the input signals has a higher value.

For understanding the frequency sensitivity of the arrangement according to Figure 3 it will now be studied what will happen if the signal coming along the line 301 does not contain a signal component at the frequency to be detected. To make it simple it can be assumed at first that the signal coming along line 301 is pure sine wave at a frequency other than the one to be detected. If this other frequency differs only a little from the frequency to be detected, the comparator 307 (likewise 308) detects a sinusoidal voltage difference between its inputs, the frequency of which is the same as the absolute value of the difference between the frequency to be detected and the frequency of the signal coming along the line 301. The amplitude of the voltage difference depends on the dimensioning of the capacitances 302 to 305 and the R-blocks, or more exactly, the time constant determined on the basis of the dimensioning, which regulates the integration of the direct voltage component into the capacitances 302 to 305. The threshold value set for the comparators 307 and 308 determines how close to the frequency to be detected the frequency of the signal coming along the line 301 must be for at least one of the comparators to give an active output signal.

If the frequency of the signal coming along the line 301 differs substantially from the frequency to be detected, the switching cycle of the multiplexer 306 is spurious in relation to the signal, or the moments at which the connection from each capacitance to the reference potential exists do not occur with any regularity in relation to the waveform of the signal coming along the line 301. Thus only an insignificantly small direct voltage component is integrated into each capacitance 302 - 305, and the output of neither of the comparators 307 and 308 is active.

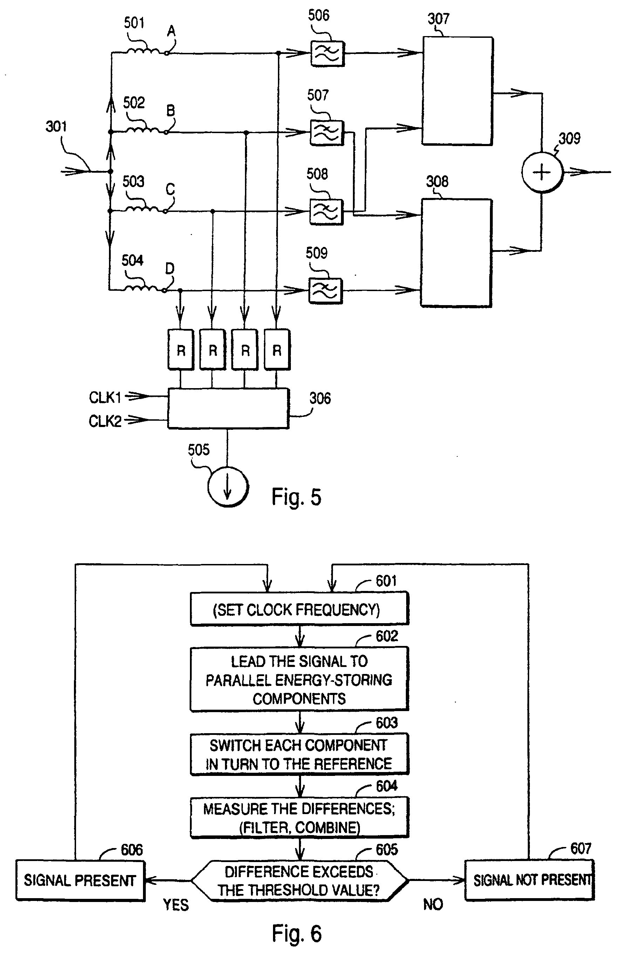

Figure 5 depicts an alternative embodiment of the invention, in which the energy-storing components 501 - 504 are inductances, in which the electric energy is stored as current and not as voltage. Thus the reference potential (ground potential in Figure 3) must be replaced by a constant current generator 505. Figure 5 also shows the low pass filters 506 - 509 between the energy-storing components 501 - 504 and the comparators 307 and 308. Filters can be used to improve the operation of a device according to the invention especially when the comparators 307 and 308 are not sufficiently immune to common-mode signals. Corresponding filters could also be used in the solution shown in Figure 3.

The embodiments of the invention described above should naturally only be seen as examples, and they do not have a limiting effect on the invention. It should be especially noted that the invention does not require that the switches which in Figures 3 and 5 are switched to the conductive mode with a common multiplexer 306 would be switched in a way that only one switch at a time conducts. In other words, the connection time of one switch can also be shorter or longer than one Nth part of the cycle time of the signal to be detected, where N is the number of energy-storing components (in Figures 3 and 5 the value of N is four); thus it is possible that several switches at a time conduct or that there are moments when none of the switches conduct. The voltage or current signals produced by the energy-storing components can be combined in many ways before they are led to the comparators, by using a so-called resistance matrix, for example. The number of parallel, energy-storing components is at least three, in which case at least three comparators are needed to compare the voltage or current differences of all the three possible pairs.

Generally if an even number of energy-storing components are connected to the reference in turns during the cycle time of the signal to be detected in the order from one to N, where N is an even number, in the measurement of the value of the variable expressive of the stored energy the values related to the first and the (N/2 + 1)^{th} component are compared, and similarly the values related to the second and the (N/2 + 2)^{th} component and so forth up to the i^{th} and (N/2 + i)^{th} component are compared, until (N/2 + i) = N.

The frequency of the clock signals used to control the multiplexer should be programmable, whereby the device can be applied to detect a signal of almost any frequency by changing the frequency of the clock signal only. The aliasing phenomenon, known from sampling theory, means that a certain sampling frequency (a certain clock frequency in the present invention) causes the detection of both the signal which was to be detected and its harmonic frequencies. If the harmonic frequencies are harmful, the device according to the invention can be equipped with an anti-alias filter in a manner known as such from sampling theory. On the other hand, some applications may even benefit from the fact that the same device can detect both a certain basic frequency and its harmonic multiples.

The threshold values used by the comparators can also be made programmable. Furthermore, it is possible to present a modified embodiment in which the output signal of the whole device is led in a known manner as feedback to influence the values of the threshold signals used by comparators, whereby the hysteresis phenomenon can be utilized in the operation of the device.

The device according to the invention can be manufactured from cheap, ordinary separate components or it can be implemented as part of an integrated circuit or as an integrated circuit on its own.

Figure 6 shows the method according to the invention as a flowchart. Step 601, setting the clock frequency, can be carried out always when there is a need to set a new signal frequency to be detected; otherwise step 601 can be ignored. In step 602 the signal is led to parallel capacitances or other energy-storing components, in step 603 connections are made in turns from parallel capacitances or the like to the reference potential or current, and in step 604 the voltage or current differences are measured, which may include filtering and combining. In step 605 it is determined whether a difference which is larger than the set threshold value has been found in the measurement. Depending on the result, return to the start takes place through step 606 or 607. If hysteresis is used to regulate the threshold values used by the comparators, a certain feedback from steps 606 and 607 to step 605 is also added to the flowchart.

## Claims

1. An electric device for detecting the presence of a signal of a certain frequency in a line connection (301), **characterized in that** it comprises
- at least three energy-storing components (302, 303, 304, 305, 501, 502, 503, 504) connected in parallel to said line connection,
- switching means (306) between said energy-storing components and a reference for making a connection selectively from each energy-storing component to said reference,
- coupled to said switching means, means (CLK1, CLK2) for controlling said switching means at a predetermined frequency,
- coupled to said energy-storing components, means (307, 308, 309) for measuring a variable expressive of the stored energy from each energy-storing component and
- comparing means for comparing at least one difference of measured variables to a threshold and for deciding therefrom whether said signal is present or not.

2. A device according to Claim 1, **characterized in that** said switching means (306) are arranged to make a connection from each energy-storing component to the reference once during the cycle time of said signal to be detected.

3. A device according to Claim 2, **characterized in that** said energy-storing components are capacitances (302, 303, 304, 305), whereby
- said means (307, 308, 309) for measuring the variable expressive of the stored energy comprise means (307, 308) for measuring the voltage difference between capacitances, and
- said reference is a standard potential.

4. A device according to Claim 3, **characterized in that** it comprises four capacitances (302, 303, 304, 305) as energy-storing components, whereby the means for measuring the voltage difference between capacitances are arranged to measure the voltage difference between the first (302) and third (304) capacitance and between the second (303) and fourth (305) capacitance, the order of the capacitances being the order in which the switching means are arranged to make a connection from each capacitance to the standard potential.

5. A device according to Claim 2, **characterized in that** said energy-storing components are inductances (501, 502, 503, 504), whereby
- said means (307, 308, 309) for measuring the variable expressive of the stored energy comprise means (307, 308) for measuring the current difference between inductances, and
- said reference is a standard current (505).

6. A device according to Claim 1, **characterized in that** it also comprises filtering means (506, 507, 508, 509) for filtering said variable expressive of the stored energy before the measurement of the variable.

7. A method for detecting the presence of a signal of a certain frequency in a line connection, **characterized in that** it comprises steps in which
- the signal is led parallelly to at least three energy-storing components connected in parallel (602),
- each energy-storing component is connected at a predetermined frequency to a reference (603),
- the value of a variable expressive of the stored energy is measured from each energy-storing component (604, 605) and
- at least one difference of measured variables is compared to a threshold, and therefrom it is decided whether said signal is present or not.

8. A method according to Claim 7, **characterized in that** each energy-storing component is connected to the reference once during the cycle time of the signal to be detected.

9. A method according to Claim 8, **characterized in that** an even number of energy-storing components are connected to the reference in turns during the cycle time of the signal to be detected in the order from one to N, where N is an even number, and in the measurement of the value of the variable expressive of the stored energy the values related to the first and the (N/2 + 1)^{th} component are compared, and similarly the values related to the second and the (N/2 + 2)^{th} component and so forth up to the i^{th} and (N/2 + i)^{th} component are compared, until (N/2 + i) = N.

10. A method according to Claim 7, **characterized in that** the value of said quantity comparable to the energy stored is filtered before it is measured.

## Patentansprüche

1. Elektrische Vorrichtung zur Erfassung des Vorhandenseins eines Signals einer gewissen Frequenz in einer Leitungsverbindung (301), **dadurch gekennzeichnet, dass** sie umfasst:
- wenigstens drei Energie speichernde Komponenten (302, 303, 304, 305, 501, 502, 503, 504) welche parallel mit der Leitungsverbindung verbunden sind,
- Schaltmittel (306) zwischen den Energie speichernden Komponenten und einer Referenz, um selektiv eine Verbindung von jeder Energie speichernden Komponente zur Referenz herzustellen,
- verbunden mit den Schaltungsmitteln Mittel (CLK1, CLK2) zum steuern/regeln der Schaltmittel bei einer vorbestimmten Frequenz,
- verbunden mit den Energie speichernden Komponenten Mittel (307, 308, 309) zum Messen einer Variable, welche die gespeicherte Energie jeder Energie speichernden Komponente ausdrückt, und
- Vergleichsmittel zum Vergleichen wenigstens einer Differenz von gemessenen Variablen mit einem Schwellwert und um daraus zu entscheiden, ob das Signal vorhanden ist oder nicht.

2. Vorrichtung nach Anspruch 1, **dadurch gekennzeichnet, dass** die Schaltmittel (306) angeordnet sind, um einmal pro Zykluszeit des zu erfassenden Signals eine Verbindung von jeder Energie speichernden Komponente zur Referenz herzustellen.

3. Vorrichtung nach Anspruch 2, **dadurch gekennzeichnet, dass** die Energie speichernden Komponenten Kapazitäten (302, 303, 304, 305) sind, wobei
- die Mittel (307, 308, 309) zum Messen der Variable, welche die gespeicherte Energie ausdrückt, Mittel (307, 308) zum Messen der Spannungsdifferenz zwischen Kapazitäten umfasst, und
- die Referenz ein Standard-Potential ist.

4. Vorrichtung nach Anspruch 3, **dadurch gekennzeichnet, dass** sie vier Kapazitäten (302, 303, 304, 305) als Energie speichernde Komponenten umfasst, wobei die Mittel zum Messen der Spannungsdifferenz zwischen Kapazitäten angeordnet sind, um die Spannungsdifferenz zwischen der ersten (302) und der dritten (304) Kapazität und zwischen der zweiten (303) und der vierten (305) Kapazität zu messen, wobei die Reihenfolge der Kapazitäten die Reihenfolge ist, in der die Schaltmittel angeordnet sind, um eine Verbindung von jeder Kapazität zum Standard-Potential herzustellen.

5. Vorrichtung nach Anspruch 2, **dadurch gekennzeichnet, dass** die Energie speichernden Komponenten Induktivitäten (501, 502, 503, 504) sind, wobei
- die Mittel (307, 308, 309) zum Messen der Variable, welche die gespeicherte Energie ausdrückt, Mittel (307, 308) zum Messen der Stromdifferenz zwischen Induktivitäten umfasst, und
- die Referenz ein Standard-Strom (505) ist.

6. Vorrichtung nach Anspruch 1, **dadurch gekennzeichnet, dass** sie auch Filtermittel (506, 507, 508, 509) zum Filtern der Variable umfasst, welche die gespeicherte Energie ausdrückt, und zwar vor dem Messen der Variable.

7. Verfahren zur Erfassung des Vorhandenseins eines Signals einer gewissen Frequenz in einer Leitungsverbindung, **dadurch gekennzeichnet, dass** es Schritte aufweist, in denen
- das Signal parallel zu wenigstens drei Energie speichernden, parallel verbundenen Komponenten geleitet wird (602),
- jede Energie speichernde Komponente mit einer vorbestimmten Frequenz mit einer Referenz verbunden wird (603),
- der Wert einer Variable, welche die gespeicherte Energie ausdrückt, von jeder Energie speichernden Komponente gemessen wird (604, 605), und
- wenigstens eine Differenz von gemessenen Variablen mit einem Schwellwert verglichen wird und davon abgeleitet wird, ob das Signal präsent ist oder nicht.

8. Verfahren nach Anspruch 7, **dadurch gekennzeichnet, dass** jede Energie speichernde Komponente während einer Zykluszeit des zu erfassenden Signals einmal mit der Referenz verbunden wird.

9. Verfahren nach Anspruch 8, **dadurch gekennzeichnet, dass** während der Zykluszeit des zu erfassenden Signals eine gerade Anzahl von Energie speichernden Komponenten der Reihe nach mit der Referenz verbunden werden, und zwar in der Reihenfolge von eins bis N, wobei N eine gerade Zahl ist, und dass bei der Messung des Werts der Variable, welche die gespeicherte Energie ausdrückt, die Werte, welche der ersten und der (N/2 + 1)-ten Komponente zugeordnet sind, verglichen werden, und dass ähnlich die Werte, welche der zweiten und der (N/2 + 2)-ten Komponente zugeordnet sind, und so fort bis zur i-ten und (N/2 + i)-ten Komponente verglichen werden bis (N/2 + i) = N ist.

10. Verfahren nach Anspruch 7, **dadurch gekennzeichnet, dass** der mit der gespeicherten Energie vergleichbare Wert gefiltert wird bevor er gemessen wird.

## Revendications

1. Un dispositif électrique pour détecter la présence d'un signal d'une certaine fréquence dans une connexion par ligne (301), **caractérisé en ce qu'**il comprend :
- au moins trois composants de stockage d'énergie (302,303,304,305,501,502,503,504) branchés en parallèle sur ladite connexion par ligne,
- des moyens de commutation (306) entre lesdits composants de stockage d'énergie et une référence pour établir une connexion sélectivement depuis chaque composant de stockage d'énergie à ladite référence,
- des moyens (CLK1, CLK2) couplés auxdits moyens de commutation, pour commander lesdits moyens de commutation à une fréquence prédéterminée,
- des moyens (307,308,309) couplés auxdits composants de stockage d'énergie, pour mesurer une variable indicative de l'énergie stockée depuis chaque composant de stockage d'énergie, et
- des moyens de comparaison pour comparer au moins une différence de variables mesurées à un seuil et pour décider à partir de cela, si ledit signal est présent ou non.

2. Un dispositif selon la revendication 1, **caractérisé en ce que** lesdits moyens de commutation (306) sont agencés pour établir une liaison à partir de chaque composant de stockage d'énergie à la référence une fois que le temps de cycle dudit signal a été détecté.

3. Un dispositif selon la revendication 2, **caractérisé en ce que** lesdits composants de stockage d'énergie sont des capacités électriques (302,303,304,305), de manière que
- lesdits moyens (307,308,309) pour mesurer la variable indicative de l'énergie stockée comprennent des moyens (307,308) pour mesurer la différence de tension entre des capacités électriques, et
- ladite référence est un potentiel standard.

4. Un dispositif selon la revendication 3, **caractérisé en ce qu'**il comprend quatre capacités électriques (302,303,304,305) en tant que composants de stockage d'énergie, dans lequel les moyens de mesure de la différence de tension entre des capacités électriques sont agencés pour mesurer la différence de tension entre la première (302) et la troisième (304) capacité électrique et entre la deuxième (303) et la quatrième (305) capacité électrique, l'ordre des capacités étant l'ordre dans lequel les moyens de commutation sont agencés pour établir une connexion à partir de chaque capacité électrique vers le potentiel standard.

5. Un dispositif selon la revendication 2, **caractérisé en ce que** lesdits composants de stockage d'énergie sont des inductances (501,502,503,504) de manière que
- lesdits moyens (307,308,309) pour mesurer la variable indicative de l'énergie stockée comprennent des moyens (307,308) pour mesurer la différence de courant entre des inductances, et
- ladite référence est un courant standard (505).

6. Un dispositif selon la revendication 1, **caractérisé en ce qu'**il comprend en outre des moyens de filtrage (506,507,508,509) pour filtrer ladite variable indicative de l'énergie stockée avant la mesure de la variable.

7. Un procédé de détection de la présence d'un signal d'une certaine fréquence dans une connexion par ligne, **caractérisé en ce qu'**ils comprend des étapes dans lesquelles
- le signal est passé parallèlement à au moins trois composants de stockage d'énergie branchés en parallèle (602),
- chaque composant de stockage d'énergie est connecté à une fréquence prédéterminée à une référence (603),
- la valeur d'une variable indicative de l'énergie stockée est mesurée à partir de chaque composant de stockage d'énergie (604,605), et
- au moins une différence des variables mesurées est comparée à un seuil et à partir de cela, on décide si ledit signal est présent au non.

8. Un procédé selon la revendication 7, **caractérisé en ce que** chaque composant de stockage d'énergie est connecté à la référence initialement durant le temps de cycle du signal à détecter.

9. Un procédé selon la revendication 8, **caractérisé en ce qu'**un nombre pair de composants de stockage d'énergie sont connectés à la référence tour à tour durant le temps de cycle du signal à détecter dans l'ordre allant de un à N, dans lequel N est un nombre pair, et dans la mesure de la valeur de la variable indicative de l'énergie stockée, les valeurs afférentes au premier et au (N/2+1)^{ième} composant sont comparées, et de façon similaire, les valeurs afférentes au deuxième et au (N/2+2)^{ième} composant et ainsi de suite jusqu'au i^{ième} et (N/2+i)^{ième} composant sont comparées, jusqu'à ce que (N/2+i)=N.

10. Un procédé selon la revendication 7, **caractérisé en ce que** la valeur de ladite quantité comparable à l'énergie stockée est filtrée avant d'être mesurée.
